(19) **Europäisches Patentamt / European Patent Office / Office européen des brevets**

(11) **EP 4 386 467 A1**

(12) # EUROPEAN PATENT APPLICATION
published in accordance with Art. 153(4) EPC

(43) Date of publication:
**19.06.2024 Bulletin 2024/25**

(21) Application number: **22885179.6**

(22) Date of filing: **01.07.2022**

(51) International Patent Classification (IPC):
***G02B 27/10*** *(2006.01)*

(52) Cooperative Patent Classification (CPC):
**G02B 27/10; Y02B 20/40**

(86) International application number:
**PCT/CN2022/103251**

(87) International publication number:
**WO 2023/071274 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.10.2021 CN 202111280767**

(71) Applicant: **Huawei Technologies Co., Ltd.
Shenzhen, Guangdong 518129 (CN)**

(72) Inventors:
• **ZOU, Bing
Shenzhen, Guangdong 518129 (CN)**
• **YAN, Yunfei
Shenzhen, Guangdong 518129 (CN)**
• **HUANG, Zhiyong
Shenzhen, Guangdong 518129 (CN)**

(74) Representative: **Gill Jennings & Every LLP
The Broadgate Tower
20 Primrose Street
London EC2A 2ES (GB)**

(54) **LIGHT SPLITTING METHOD AND RELATED DEVICE**

(57)    This application provides a light splitting method. The method may be applied to a vehicle. The vehicle includes at least two devices to emit light that provide light energy by using a centralized light source, and each of the devices to emit light is connected to the centralized light source by using an optical waveguide. A control device in the vehicle may obtain a light-emitting instruction, where the light-emitting instruction carries information about a first optical power required by one target device to emit light of the at least two devices to emit light, or information about a first optical power required by each of a plurality of target devices to emit light; and allocate, based on the information about the first optical power, light emitted by the centralized light source, so that each target device to emit light obtains respective corresponding light by using the optical waveguide. In this way, a light source is properly used, and utilization of the light source is improved.

FIG. 2

EP 4 386 467 A1

## Description

This application claims priority to Chinese Patent Application No. 202111280767.0, filed with the China National Intellectual Property Administration on October 29, 2021 and entitled "LIGHT SPLITTING METHOD AND RELATED DEVICE", which is incorporated herein by reference in its entirety.

## TECHNICAL FIELD

This application relates to the field of light splitting technologies, and specifically, to a light splitting method and a related device.

## BACKGROUND

Light sources are widely used in various devices such as display devices and light fixtures. Currently, each device is usually provided with an independent light source. In a complex hardware system such as a vehicle, there are usually a large quantity of devices that need to emit light. As a result, light sources in these hardware systems occupy large space, and utilization of the light sources is not high.

## SUMMARY

This application provides a light splitting method, to properly use a light source and improve utilization of the light source. This application further provides a corresponding apparatus, computer device, computer-readable storage medium, computer program product, and the like.

According to a first aspect, this application provides a light splitting method applied to a control device. The control device is located in a vehicle. The vehicle further includes at least two devices to emit light that provide light energy by using a centralized light source, and each of the devices to emit light is connected to the centralized light source by using an optical waveguide. The method includes: obtaining a light-emitting instruction, where the light-emitting instruction carries information about a first optical power required by one target device to emit light of the at least two devices to emit light, or information about a first optical power required by each of a plurality of target devices to emit light; and allocating, based on the information about the first optical power, light emitted by the centralized light source, so that each target device to emit light obtains respective corresponding light by using the optical waveguide.

In the first aspect, the light splitting method may be applied to a complex hardware system such as a driving tool. The driving tool may be a vehicle, a ship, an airplane, a railway train, or the like. The device to emit light may be a display device and/or a light fixture. The control device may control on or off of one or more of components such as light splitting devices, optical coupled devices, and optical switches on optical transmission paths from the centralized light source to the target devices to emit light, and adjust parameters such as a split ratio, to allocate the light emitted by the centralized light source.

It can be learned from the foregoing that, in the first aspect, the centralized light source may provide light energy to one or more of the at least two devices to emit light in a light splitting system based on requirements, thereby reducing a quantity of light sources in the vehicle or other hardware systems, reducing a space requirement and a heat dissipation requirement of the light source, and improving utilization of the used light source. In addition, the light emitted by the centralized light source may be allocated based on the first optical power, so that the light emitted by the centralized light source can be flexibly allocated based on an actual scenario requirement, and the light transmitted to the device to emit light can meet a light-emitting requirement of the device to emit light.

In a possible implementation of the first aspect, the vehicle further includes a first light splitting device. The foregoing step of allocating, based on the information about the first optical power, light emitted by the centralized light source, so that each target device to emit light obtains respective corresponding light by using the optical waveguide includes: determining a split ratio of the first light splitting device based on the information about the first optical power, so that each target device to emit light obtains respective corresponding light by using the optical waveguide.

In this possible implementation, the first light splitting device may be one light splitter, or may include a plurality of light splitters. In the light splitters included in the first light splitting device, at least one light splitter is a light splitter with an adjustable split ratio. The split ratio of the first light splitting device corresponding to the device to emit light is determined based on the first optical power, and the light energy from the centralized light source may be flexibly allocated by using the first light splitting device based on an actual scenario requirement, so that target light energy transmitted to the device to emit light can meet a light-emitting requirement of the device to emit light.

In a possible implementation of the first aspect, the centralized light source is configured to emit red light, green light, and blue light, the red light, the green light, and the blue light are separately transmitted when emitted from the centralized light source, and the light-emitting instruction further carries color information of light required by each target device to emit light. The foregoing step of determining the split ratio of the first light splitting device based on the information about the first optical power includes: determining, based on the first optical power and the color information, split ratios of the first light splitting device for the red light, the green light, and the blue light respectively.

In this possible implementation, the split ratios of the first light splitting device for red light, green light, and blue light respectively may be split ratios of the first light splitting device for red light, green light, and blue light received by each target device to emit light. The first light splitting device may be one light splitter, and an output port of the one light splitter corresponds to red light, green light, or blue light of a device to emit light. Alternatively, the first light splitting device may include a plurality of light splitters, and the plurality of light splitters may be in a one-to-one correspondence with the plurality of devices to emit light.

It can be learned that, in this possible implementation, the first light splitting device may be used to not only control the manner of allocating light emitted by the centralized light source to the target devices to emit light, but also control, by adjusting split ratios respectively corresponding to red light, green light, and blue light, the colors of the light received by the target devices to emit light, thereby greatly improving control efficiency, reducing use of the wavelength conversion apparatus, and reducing hardware costs.

In a possible implementation of the first aspect, each device to emit light is connected to a second light splitting device, and the second light splitting device is further connected to an optical power meter. The light splitting method further includes: when the target device to emit light emits light, obtaining a third optical power detected by an optical power meter corresponding to the target device to emit light; and determining the split ratio of the first light splitting device based on the third optical power, and/or determining an optical power of the centralized light source.

In this possible implementation, a split ratio of the second light splitting device is a fixed value. In this way, a ratio of a power of light received by a target device to emit light corresponding to any second light splitting device to a third optical power detected by an optical power meter corresponding to the second light splitting device is a fixed value. Therefore, in this possible implementation, the third optical power detected by the optical power meter corresponding to the target device to emit light may be used to determine a value of light energy of the light received by the corresponding target device to emit light, to determine whether the value of light energy of the light received by the corresponding target device to emit light meets a requirement of the corresponding target device to emit light.

Usually, the second light splitting device allocates more light energy to the corresponding target device to emit light, and allocates less light energy to the corresponding optical power meter. For example, a second split ratio of a second light splitting device corresponding to a target device to emit light is 1:99. In this way, most of the light may be transmitted to the corresponding target device to emit light for light emitting, and only a small part of the light is transmitted to the corresponding optical power meter for detection, thereby avoiding a waste of light energy.

In a possible implementation of the first aspect, the target device to emit light includes a first device to emit light and a second device to emit light, and a ratio of a maximum optical power corresponding to the first device to emit light to a maximum optical power corresponding to the second device to emit light is less than a preset ratio threshold. The light splitting method further includes: if it is detected that a first optical power of the first device to emit light is updated, updating the split ratio of the first light splitting device based on an updated first optical power of the first device to emit light.

In this possible implementation, the preset ratio threshold is usually small. For example, the preset ratio threshold may be 0.2, 0.1, or 0.05. In this way, the ratio of the maximum optical power corresponding to the first device to emit light to the maximum optical power corresponding to the second device to emit light is less than the preset ratio threshold, indicating that the maximum optical power corresponding to the first device to emit light is apparently less than the maximum optical power corresponding to the second device to emit light.

In this possible implementation, the split ratio of the first light splitting device may be updated based on a first optical power of the second device to emit light and the updated first optical power of the first device to emit light, to reallocate the light respectively obtained by the first device to emit light and the second device to emit light. In this case, before and after reallocation, a sum of the light respectively obtained by the first device to emit light and the second device to emit light may remain unchanged. In this way, the optical power of the centralized light source may also remain unchanged, and only the split ratio of the first light splitting device needs to be updated. It can be learned that, although the first optical power required by the target device to emit light changes, in an actual control process, the split ratio of only the first light splitting device needs to be adjusted, and the optical power of the centralized light source does not need to be adjusted. Therefore, a control procedure is optimized, the optical power of the centralized light source is avoided from being adjusted frequently, and a service life of the centralized light source is prolonged.

In a possible implementation of the first aspect, the light splitting method further includes: determining the optical power of the centralized light source based on the first optical power, where the optical power of the centralized light source is not less than a sum of first optical powers respectively corresponding to the target devices to emit light; and controlling the centralized light source to emit light based on the optical power of the centralized light source.

In this possible implementation, the optical power of the centralized light source may be properly determined based on the first optical power, thereby avoiding a resource waste while the requirement of the target device to emit light is met.

According to a second aspect, this application provides a light splitting apparatus. The apparatus may be applied to a control device. The control device is located in a vehicle. The vehicle further includes at least two devices to emit light that provide light energy by using a centralized light source, and each of the devices to emit light is connected to the centralized light source by using an optical waveguide. The light splitting apparatus has functions to implement the method according to the first aspect or any possible implementation of the first aspect. The functions may be implemented by hardware, or may be implemented by hardware executing corresponding software. The hardware or software includes one or more modules corresponding to the foregoing functions, for example, an obtaining module and an allocation module.

According to a third aspect, this application provides a control device. The control device includes at least one processor, a memory, a communication interface, and computer-executable instructions that are stored in the memory and runnable on the processor. When the computer-executable instructions are executed by the processor, the processor performs the method according to the first aspect or any possible implementation of the first aspect.

According to a fourth aspect, this application provides a computer-readable storage medium storing one or more computer-executable instructions. When the computer-executable instructions are executed by a processor, the processor performs the method according to the first aspect or any possible implementation of the first aspect.

According to a fifth aspect, this application provides a computer program product storing one or more computer-executable instructions. When the computer-executable instructions are executed by a processor, the processor performs the method according to the first aspect or any possible implementation of the first aspect.

According to a sixth aspect, this application provides a chip system. The chip system includes a processor, configured to support a control device in implementing functions in the first aspect or any possible implementation of the first aspect. In a possible design, the chip system may further include a memory. The memory is configured to store program instructions and data that are necessary for the control device. The chip system may include a chip, or may include a chip and another discrete device.

According to a seventh aspect, this application provides a light splitting system. The light splitting system includes a control device, and the control device is configured to implement the method according to the first aspect or any possible implementation of the first aspect.

In a possible implementation of the seventh aspect, the light splitting system further includes at least two devices to emit light, and each of the devices to emit light is connected to a centralized light source by using an optical waveguide.

In a possible implementation of the seventh aspect, an optical waveguide end structure is located at one end of the optical waveguide on a corresponding target device to emit light, and the optical waveguide end structure corresponds to a target light type of the corresponding target device to emit light.

In this possible implementation, a target light type of any target device to emit light refers to a light type required by the target device to emit light. The target light type may be described by using at least one of the following: a form (such as a face light type, a linear light type, or a point light type) of the target light type, a shape (such as a rectangle, a circle, a triangle, a sector, or a trapezoid), a size (such as a width, a length, or a diameter) of the target light type, light intensity distribution in the target light type, and the like. A specific form of the optical waveguide end structure may be flexibly adjusted based on a requirement of the corresponding device to emit light, so that different light types are conveniently and flexibly generated in different devices to emit light as required. In this way, it is unnecessary to configure various different light shaping devices in the devices to emit light for requirements of different light types of the devices to emit light, for example, configure a light guide plate, a light uniform plate, and another light type conversion device, thereby greatly reducing hardware costs.

In a possible implementation of the seventh aspect, in an optical waveguide end structure corresponding to at least one target device to emit light, a cladding on a side surface of the optical waveguide is cut to form a light transmission region, so that the optical waveguide end structure emits light from the side surface based on a corresponding target light type.

In this possible implementation, to meet requirements of target light types in some application scenarios, the cladding on the side surface of the optical fiber in the optical fiber end structure may be cut in advance, so that light in the optical core in the optical fiber end structure can be emitted from the light transmission region of the side surface of the optical fiber. The light transmission region formed by cutting the cladding may be covered with a transparent material. The transparent material may be for protecting an optical core exposed due to cutting the cladding accordingly. An area and a shape of the light transmission region may be flexibly determined based on the target light type, so that different light types may be conveniently and flexibly generated in different devices to emit light as required.

In a possible implementation of the seventh aspect, the target device to emit light includes a display panel of a vehicle, a target light type corresponding to the display panel is a face light type, and in an optical waveguide end structure corresponding to the display panel, the optical waveguide is bent based on the face light type and is arranged in the target light-emitting region, to serve as the backlight source of the display panel.

In this possible implementation, the optical waveguide end structure may be arranged in the target light-emitting region in an arrangement manner of being bent into a plurality of optical waveguide sections and sequentially arranged in a bending sequence, or an arrangement manner of being bent into multilayer circles or rectangular frames, to form the face light type.

In a possible implementation of the seventh aspect, in an optical waveguide end structure corresponding to at least one target device to emit light, a shape of a cross section of an optical core corresponds to the target light type of the corresponding target device to emit light.

In this possible implementation, a surface perpendicular to a central axis of the optical core is the cross section of the optical core. That the shape of the cross section of the optical core corresponds to the target light type of the corresponding target device to emit light may be that the shape of the cross section of the optical core is the same as or similar to the target light type of the corresponding target device to emit light, so that when one end of the optical core on the corresponding target device to emit light is used to emit light, the corresponding target light type can be formed based on the shape of the cross section of the optical core.

In a possible implementation of the seventh aspect, the target device to emit light includes a projection device of the vehicle, a target light type corresponding to the projection device is a rectangular light type, and a shape of a cross section of an optical core in an optical waveguide end structure corresponding to the projection device is a rectangle.

In this possible implementation, the projection device may be a head-up display device in the vehicle, a device configured to perform projection display for a passenger in a passenger space, and a device configured to project driving indication information on a driving path of the vehicle. A point light type is usually used in the projection device, and a specific form of the point light type is a rectangular light type. Therefore, in this possible implementation, the shape of the cross section of the optical core in the optical waveguide end structure corresponding to the projection device is a rectangle, so that when light is transmitted to an end portion of the optical core in the optical waveguide end structure corresponding to the projection device, light is emitted by using the end portion of the optical core, to form the rectangular light type.

In a possible implementation of the seventh aspect, the target device to emit light includes a headlamp of the vehicle, in an optical waveguide end structure corresponding to the headlamp, an optical core of the optical waveguide includes a first optical core and a second optical core, and a refractive index of the first optical core and a refractive index of the second optical core correspond to light intensity distribution in a target light type of the headlamp.

In this possible implementation, a light intensity of an upper portion of the target light type of the headlamp is strong, and a light intensity of a lower portion is weak. Based on a requirement of the target light type of the headlamp, the first optical core is located above the second optical core, and a refractive index of the first optical core is greater than that of the second optical core. In this way, a light intensity of light output by the first optical core is greater than a light intensity of light output by the second optical core, so that the optical waveguide end structure of the headlamp can emit a light type with light intensities gradually weakening from up to down. The light type may be the same as or similar to the target light type of the headlamp, thereby reducing use of some light shaping devices in the headlamp.

In a possible implementation of the seventh aspect, the device to emit light includes a display device and/or a light fixture in the vehicle.

In this possible implementation, the display device may include the display panel and/or the projection device. The display panel is a device that performs planar display or curved display by using a display screen such as a touchscreen or a non-touchscreen. For example, the display panel may include at least one of a touchscreen panel in the in-vehicle computer and various meter display panels. The projection device is a device that can project an image, a video, or the like to an entity such as a curtain, a wall, or a road, or project an image or a video to a non-entity such as air. For example, the projection device may include at least one of a head-up display device in the vehicle, a device configured to perform projection display for a passenger in a passenger space, and a device configured to project driving indication information on a driving path of the vehicle. The light fixture may be a lighting tool or an information indication tool. For example, the light fixture may be at least one of a vehicle light, a lighting device in the vehicle, an indicator for assisting a driver in driving in the vehicle, or an indicator for prompting a passenger.

According to an eighth aspect, this application provides a vehicle. The vehicle includes the light splitting system according to the seventh aspect or any possible implementation of the seventh aspect.

For technical effects brought by the second aspect to the sixth aspect or any possible implementation of the second aspect to the sixth aspect, refer to the technical effects brought by the first aspect or any possible implementation of the first aspect. For technical effects brought by the eighth aspect, refer to the technical effects brought by the seventh aspect or any possible implementation of the seventh aspect. Details are not described herein again.

**BRIEF DESCRIPTION OF DRAWINGS**

FIG. 1 is an example functional block diagram of a vehicle according to an embodiment of this application;

FIG. 2 is a schematic diagram of an embodiment of a light splitting method according to an embodiment of this application;

FIG. 3 is an example schematic diagram of a centralized light source according to an embodiment of this application;

FIG. 4 is an example schematic diagram of a system architecture according to an embodiment of this application;

FIG. 5a is an example schematic diagram of a first light splitting device according to an embodiment of this application;

FIG. 5b is another example schematic diagram of a first light splitting device according to an embodiment of this application;

FIG. 6a is a schematic diagram of a light-emitting manner of a centralized light source and a manner in which a target device to emit light obtains required light according to an embodiment of this application;

FIG. 6b is another schematic diagram of a light-emitting manner of a centralized light source and a manner in which a target device to emit light obtains required light according to an embodiment of this application;

FIG. 6c is still another schematic diagram of a light-emitting manner of a centralized light source and a manner in which a target device to emit light obtains required light according to an embodiment of this application;

FIG. 7 is an example schematic diagram of a system architecture according to an embodiment of this application;

FIG. 8 is a schematic diagram of an embodiment of a light splitting apparatus according to an embodiment of this application;

FIG. 9 is a schematic diagram of a structure of a control device according to an embodiment of this application;

FIG. 10 is a schematic diagram of a structure of a light splitting system according to an embodiment of this application;

FIG. 11 is an example schematic diagram of a structure of an optical fiber according to an embodiment of this application;

FIG. 12 is an example schematic diagram of a light transmission region of an optical waveguide end structure according to an embodiment of this application;

FIG. 13a is an example schematic diagram of an optical waveguide end structure according to an embodiment of this application;

FIG. 13b is another example schematic diagram of an optical waveguide end structure according to an embodiment of this application;

FIG. 13c is still another example schematic diagram of an optical waveguide end structure according to an embodiment of this application;

FIG. 13d is still another example schematic diagram of an optical waveguide end structure according to an embodiment of this application;

FIG. 14a is an example schematic diagram of a cross section of an optical core in an optical waveguide end structure corresponding to a projection device according to an embodiment of this application;

FIG. 14b is an example schematic diagram of light intensity distribution of a target light type of a headlamp according to an embodiment of this application;

FIG. 14c is an example schematic diagram of a cross section of an optical core in an optical waveguide end structure corresponding to a headlamp according to an embodiment of this application; and

FIG. 15 is a schematic diagram of a structure of a vehicle according to an embodiment of this application.

## DESCRIPTION OF EMBODIMENTS

The following describes embodiments of this application with reference to the accompanying drawings. It is obvious that the described embodiments are merely some rather than all of embodiments of this application. A person of ordinary skill in the art may know that as the technology evolves and new scenarios emerge, the technical solutions provided in embodiments of this application are also applicable to similar technical problems.

In the specification, claims, and accompanying drawings of this application, the terms "first", "second", and so on are intended to distinguish between similar objects but do not necessarily indicate a specific order or sequence. It should be understood that, the data used in such a way is interchangeable in proper cases, so that the embodiments described herein can be implemented in other orders than the order illustrated or described herein. In addition, the terms "include" and "have" and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a light splitting method, to properly use a light source and improve utilization of the light source. Embodiments of this application further provide a corresponding apparatus, computer device, computer-readable storage medium, computer program product, and the like. Details are separately described below.

The light splitting method provided in an embodiment of this application may be applied to a complex hardware system such as a vehicle, a ship, an airplane, or a railway train.

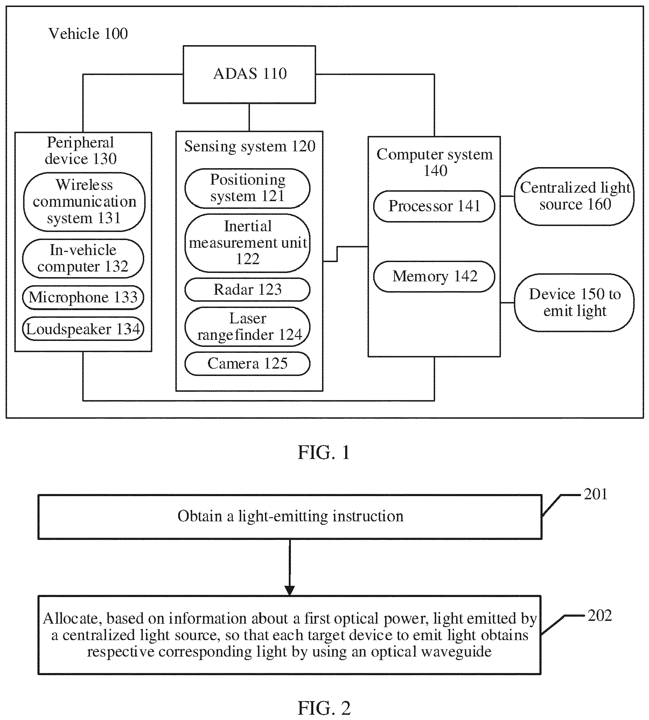

The following describes a vehicle to which an embodiment of this application is applied, as shown in FIG. 1, FIG. 1 is a functional block diagram of an embodiment of a vehicle according to this application. In an embodiment, a vehicle 100 is configured to be in a fully self-driving mode or a partially self-driving mode. For example, the vehicle 100 may control itself in the self-driving mode, may further determine a current status of the vehicle and a surrounding environment by a manual operation, determine a possible behavior of at least one another vehicle in the surrounding environment, and determine a confidence level corresponding to a possibility that the another vehicle performs the possible behavior. The vehicle 100 is controlled based on determined information. When the vehicle 100 is in the self-driving mode, the vehicle 100 may operate without interacting with a person. The vehicle 100 may include various systems, and each system may include a plurality of elements. In addition, all the systems and elements of the vehicle 100 may be wiredly or wirelessly interconnected to each other.

The vehicle shown in this embodiment includes a sensor system 120, and the sensor system 120 may include several sensors that sense information about the surrounding environment of the vehicle 100. For example, the sensor system 120 may include a positioning system 121 (the positioning system may be a global positioning system (global positioning system, GPS) system, or may be the COMPASS system, or another positioning system), an inertial measurement unit (inertial measurement unit, IMU) 122, a radar 123, a laser rangefinder 124, and a camera 125. The sensor system 120 may further include sensors of an internal system of the monitored vehicle 100 (for example, an in-vehicle air quality monitor, a fuel gauge, and an oil temperature gauge). Sensor data from one or more of these sensors can be used to detect an object and corresponding features (a position, a shape, a direction, a speed, and the like) of the object. Such detection and recognition are key functions for safe operations of the self-driving vehicle 100. The positioning system 121 may be configured to estimate a geographical position of the vehicle 100. The IMU 122 is configured to sense position and orientation changes of the vehicle 100 based on an inertial acceleration. In an embodiment, the IMU 122 may be a combination of an accelerometer and a gyroscope. The radar 123 may sense an object in the surrounding environment of the vehicle 100 by using a radio signal. In some embodiments, in addition to sensing the object, the radar 123 may be further configured to sense a speed and/or a forward direction of the object. A specific type of the radar 123 is not limited in this embodiment. For example, the radar 123 may be a millimeter-wave radar or a laser radar. The laser rangefinder 124 may sense, by using a laser, an object in an environment in which the vehicle 100 is located. In some embodiments, the laser rangefinder 124 may include one or more laser sources, a laser scanner, one or more detectors, and other system components. The camera 125 may be configured to capture a plurality of images of the surrounding environment of the vehicle 100. The camera 125 may be a static camera, a video camera, a mono/binocular camera, or an infrared imager.

The vehicle 100 further includes an advanced driving assistance system (advanced driving assistance system, ADAS) 110. In a driving process of the vehicle, the ADAS 110 senses the surrounding environment at any time, collects data, performs identification, detection, and tracking on static and dynamic objects, and performs system computing and analysis based on navigation map data. In this way, drivers can be aware of potential risks in advance, thereby effectively improving comfort and safety of vehicle driving. For example, the ADAS 110 may control the vehicle based on data obtained by the sensing system 120. For another example, the ADAS 110 may control the vehicle based on in-vehicle machine data. The in-vehicle machine data may be main data (fuel consumption, a motor rotational speed, a temperature, and the like) on a vehicle dashboard, information about a vehicle speed, information about a rotation angle of a steering wheel, posture data of a vehicle body, or the like.

The ADAS 110 may control the vehicle in one or more of the following manners:

The ADAS 110 adjusts a forward direction of the vehicle 100. The ADAS 110 controls an operation speed of an engine of the vehicle to control a speed of the vehicle 100. The ADAS 110 operates an image captured by the camera 125, to recognize an object and/or a feature in the surrounding environment of the vehicle 100. In some embodiments, the ADAS 110 may be configured to map the environment, track the object, estimate a speed of the object, and the like. The ADAS 110 determines a driving route of the vehicle 100. In some embodiments, the ADAS 110 may determine the driving route for the vehicle 100 with reference to one or more pieces of predetermined map data from the sensing system 120. The ADAS 110 may recognize, evaluate, and avoid a potential obstacle in the environment of the vehicle 100 or cross the potential obstacle in another manner.

The vehicle 100 interacts with an external sensor, another vehicle, another computer system, or a user by using a peripheral device 130. The peripheral device 130 may include a wireless communication system 131, an in-vehicle computer 132, a microphone 133, and/or a loudspeaker 134.

In some embodiments, the peripheral device 130 provides a means for the user of the vehicle 100 to interact with a user interface. For example, the in-vehicle computer 132 may provide information to the user of the vehicle 100. The user interface may further operate the in-vehicle computer 132 to receive an input from the user. The in-vehicle computer 132 may be operated by using a touchscreen. In another case, the peripheral device 130 may provide a means for the vehicle 100 to communicate with another device located in the vehicle. For example, the microphone 133 may receive an audio (for example, a voice command or another audio input) from the user of the vehicle 100. Similarly, the loudspeaker 134 may output an audio to the user of the vehicle 100.

The wireless communication system 131 may perform wireless communication with one or more devices directly or through a communication network. For example, the wireless communication system 131 may use the 3rd generation mobile communication technology (3rd-generation, 3G) for cellular communication, such as code division multiple access (code division multiple access, CDMA), a global system for mobile communications (global system for mobile communications, GSM), and a general packet radio service (general packet radio service, GPRS). The wireless communication system 131 may use the 4th generation mobile communication technology (the 4th generation mobile communication technology, 4G) for cellular communication, such as long term evolution (long term evolution, LTE). The wireless communication system 131 may further use the 5th generation mobile communication technology (5th generation mobile communication technology, 5G) for cellular communication. The wireless communication system 131 may use a wireless local area network (wireless local area network, WLAN) for communication. In some embodiments, the wireless communication system 131 may directly communicate with a device by using an infrared link, Bluetooth, or a ZigBee protocol (ZigBee). The wireless communication system 131 may further use various vehicle communication systems. For example, the wireless communication system 131 may include one or more dedicated short range communications (dedicated short range communications, DSRC) devices, and these devices may include public and/or private data communication between vehicles and/or roadside stations.

Some or all of functions of the vehicle 100 are controlled by a computer system 140. The computer system 140 may control the functions of the vehicle 100 based on inputs received from various systems (such as the sensing system 120, the ADAS 110, the peripheral device 130) and the user interface. The computer system 140 may include at least one processor 141, and the processor 141 executes instructions stored in a non-transitory computer-readable medium such as a memory 142. The computer system 140 may alternatively be a plurality of computing devices that control an individual component or a subsystem of the vehicle 100 in a distributed manner.

A type of the processor 141 is not limited in this embodiment. For example, the processor 141 may be one or more field-programmable gate arrays (field-programmable gate array, FPGA), an application-specific integrated circuit (application-specific integrated circuit, ASIC), a system-on-chip (system on chip, SoC), a central processing unit (central processor unit, CPU), a network processor (network processor, NP), a digital signal processor (digital signal processor, DSP), micro controller unit (micro controller unit, MCU), a programmable logic device (programmable logic device, PLD), another integrated chip, or any combination of the foregoing chips or processors. The processor 141 may be located inside the vehicle, or the processor 141 may be located far away from the vehicle and perform wireless communication with the vehicle.

In some embodiments, the memory 142 may include instructions (for example, program logic), and the instructions may be executed by the processor 141 to perform various functions of the vehicle 100. In addition to the instructions, the memory 142 may further store data, for example, map data, route information, a position, a direction, and a speed of the vehicle, and data of another vehicle. The information stored in the memory 142 may be used by the vehicle 100 and the computer system 140 when the vehicle 100 is operating in an autonomous, semi-autonomous, and/or manual mode.

The vehicle 100 shown in this embodiment further includes at least two devices 150 to emit light (only one of the two devices to emit light is shown as an example in FIG. 1) and a centralized light source 160. The device 150 to emit light may be a display device or a light fixture in the vehicle 100. The display device may be a display panel and/or a projection device, and the light fixture may be a vehicle light, a lighting device in the vehicle, an indicator for assisting a driver in driving in the vehicle, or an indicator for prompting a passenger. The centralized light source 160 is configured to provide light energy to the at least two devices to emit light. The vehicle 100 may allocate, by using a control device, light emitted by the centralized light source, so that each device to emit device that currently needs to emit light obtains respective corresponding light by using an optical waveguide. The control device may be located in the computer system 140 shown in FIG. 1, or may be another computing device in the vehicle 100 other than the computer system 140. The at least two devices 150 to emit light and the centralized light source 160 shown in this embodiment may not only be applied to a vehicle, but also be applied to driving tools such as a ship, an airplane, and a railway train.

The following describes, with reference to the embodiments, a process of allocating the light emitted by the centralized light source to enable each device to emit light that currently needs to emit light obtains respective corresponding light by using the optical waveguide.

An embodiment of the light splitting method provided in embodiments of this application may be applied to a control device of a driving tool such as a vehicle. The vehicle is used as an example. The vehicle further includes at least two devices to emit light that provide light energy by using a centralized light source, and each of the devices to emit light is connected to the centralized light source by using an optical waveguide.

The device to emit light is a device that needs to emit light, and the device to emit light may not include a light source.

The optical waveguide (optical waveguide) is a dielectric that guides light waves to be transmitted in the optical waveguide, and is also referred to as a dielectric optical waveguide. The optical waveguide may be in a plurality of forms. For example, the optical waveguide may be a planar optical waveguide, a strip optical waveguide, or a cylindrical optical waveguide. The cylindrical optical waveguide is generally referred to as an optical fiber (optical fiber), and is referred to as an optical fiber for short.

As shown in FIG. 2, this embodiment includes the following steps.

201: Obtain a light-emitting instruction.

The light-emitting instruction carries information about a first optical power required by one target device to emit light of the at least two devices to emit light, or information about a first optical power required by each of a plurality of target devices to emit light.

The light-emitting instruction may be generated in a plurality of manners. The light-emitting instruction may be generated by the control device, or may be transmitted to the control device by another device other than the control device in a wired communication manner or a wireless communication manner. The light-emitting instruction may be triggered to be generated based on a user operation, or may be automatically generated by the control device or another device based on data detected by a camera or another sensor on the vehicle.

For example, in an example, a driver may trigger the control device to generate the light-emitting instruction by inputting a voice into an in-vehicle computer, executing a specified control gesture, tapping a specified physical button on the vehicle, or tapping a specified virtual button on a touchscreen of the in-vehicle computer. In another example, the control device is an advanced driving assistance system (advanced driving assistance system, ADAS). After obtaining an environment image shot by an in-vehicle camera, the ADAS determines, based on the environment image, that an environment luminance corresponding to the vehicle is less than a preset luminance threshold, and generates a light-emitting instruction about a specified vehicle light, to trigger the vehicle to turn on the vehicle light for lighting. The target device to emit light may be considered as a device to emit light that needs to emit light at a time corresponding to the light-emitting instruction or in a time period corresponding to the time.

In this embodiment of this application, each target device to emit light may be in a one-to-one correspondence with one light-emitting instruction, or one light-emitting instruction may carry information about first optical powers respectively required by the plurality of target device to emit lights. A first optical power required by a target device to emit light may be fixed. For example, if a target device to emit light is a headlamp, a first optical power required by the headlamp may be fixed in advance. After detecting a triggering operation by the user to trigger the headlamp to be turned on for lighting, the vehicle may query prestored information about the first optical power corresponding to the headlamp, to generate a light-emitting instruction corresponding to the headlamp. Alternatively, a first optical power required by a target device to emit light may change based on application scenarios. For example, if a target device to emit light is a display panel of the in-vehicle computer, when the user adjusts a display luminance of a display interface of the in-vehicle computer, the in-vehicle computer may be triggered to generate, based on a display luminance selected by the user, a light-emitting instruction corresponding to the display panel of the in-vehicle computer, and send the light-emitting instruction to the control device. The light-emitting instruction carries information about a first optical power corresponding to the display panel of the in-vehicle computer, and the first optical power corresponding to the display panel of the in-vehicle computer is determined based on the display luminance selected by the user.

202: Allocate, based on the information about the first optical power, light emitted by the centralized light source, so that each target device to emit light obtains respective corresponding light by using the optical waveguide.

The centralized light source can provide light energy for a plurality of devices to emit light at the same time. The centralized light source may be arranged in the vehicle. For example, the centralized light source may be located in a chassis of the vehicle or in space inside the vehicle, or may be located in a place with a large space, such as a trunk or an engine block of the vehicle. Usually, a light source requires an additional heat dissipation apparatus. Compared with a manner of arranging independent light sources to provide light energy for the devices to emit light respectively, in this embodiment of this application, when the centralized light source is arranged in the vehicle to provide light energy for the plurality of devices to emit light, a heat dissipation manner and a volume of the centralized light source are less restricted, thereby saving space and hardware costs, and facilitating more flexible design and production of the vehicle.

A specific type of the centralized light source is not limited in this embodiment of this application. For example, the centralized light source may be a halogen lamp, a light-emitting diode (light-emitting diode, LED), a laser, a super high pressure mercury lamp, or a xenon lamp. In an example, the centralized light source is set as a laser. In this way, the light emitted by the centralized light source is well concentrated, and can be conveniently received and transmitted by the optical waveguide, thereby avoiding a large optical loss during light transmission.

A maximum optical power of the centralized light source may be determined based on maximum optical powers and optical losses of the devices to emit light, so that when the devices to emit light need to emit light simultaneously, the centralized light source can provide robust light energy. The optical losses may include losses of light in processes such as light transmission, light receiving, beam combination, and beam splitting of the centralized light source, a light splitting device, the optical waveguides, and the devices to emit light. In addition, in some examples, statistics may be further collected in advance on historical use periods corresponding to the devices to emit light and information about optical powers corresponding to the historical use periods, and then a maximum value of a sum of optical powers of at least two devices to emit light that simultaneously emit light in a historical use process is determined based on the information collected in advance, so that determine the maximum optical power of the centralized light source is determined based on the maximum value.

The centralized light source may be a monochromatic light source (for example, a blue light source), or may be a polychromatic light source (for example, a red green blue (red green blue, RGB) three-color light source).

If the centralized light source is a polychromatic light source, light of a plurality of different colors generated by the centralized light source may be combined and then allocated to each target device to emit light by using the optical waveguide.

If the centralized light source is a monochromatic light source, or the centralized light source is a polychromatic light source, but polychromatic light generated by the centralized light source is combined and then allocated to each target device to emit light by using the optical waveguide, it may be considered that the light allocated by the centralized light source to each device to emit light is light of a single wavelength, in other words, monochromatic light. In this way, if a device to emit light exists, and a wavelength of light required by the device to emit light is different from a wavelength of light emitted by the centralized light source, a wavelength conversion apparatus corresponding to the device to emit light may be used to perform wavelength conversion on the light transmitted to the device to emit light. A specific type of the wavelength conversion apparatus is not limited herein. For example, the wavelength conversion apparatus may perform wavelength conversion by using a fluorescent material, or perform wavelength conversion based on an optical-to-electrical conversion principle.

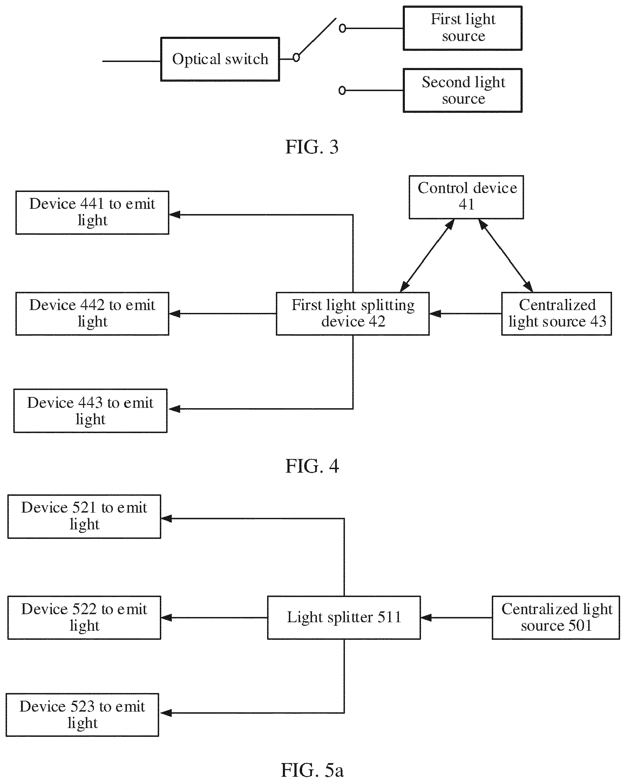

In some examples, as shown in FIG. 3, to improve reliability of the centralized light source, the centralized light source may include a first light source, at least one second light source, and an optical switch. The first light source is a normally used light source, and the second light source is a spare light source of the first light source. A quantity of the second light sources is not limited herein, and may be, for example, determined based on a service life and a failure frequency rate of the first light source and the like. In an actual application scenario, if detecting that the first light source fails, the control device may switch to an available second light source by using the optical switch, to ensure that the centralized light source normally emits light, thereby improving reliability of the centralized light source.

In this embodiment of this application, the control device may control on or off of one or more of components such as light splitting devices, optical coupled devices, and optical switches on optical transmission paths from the centralized light source to the target devices to emit light, and adjust parameters such as a split ratio, to allocate the light emitted by the centralized light source.

It can be learned that, in this embodiment of this application, the centralized light source may provide light energy to one or more of the at least two devices to emit light in a light splitting system based on requirements, thereby reducing a quantity of light sources in the vehicle or other hardware systems, reducing a space requirement and a heat dissipation requirement of the light source, and improving utilization of the used light source. In addition, the light emitted by the centralized light source may be allocated based on the first optical power, so that the light emitted by the centralized light source can be flexibly allocated based on an actual scenario requirement, and the light transmitted to the device to emit light can meet a light-emitting requirement of the device to emit light.

In some embodiments, the device to emit light may include a display device and/or a light fixture.

The display device may include a projection device and/or a display panel.

The display panel is a device that performs planar display or curved display by using a display screen such as a touchscreen or a non-touchscreen. For example, the display panel may include at least one of a touchscreen panel in the in-vehicle computer and various meter display panels. The projection device is a device that can project an image, a video, or the like to an entity such as a curtain, a wall, or a road, or project an image or a video to a non-entity such as air. For example, the projection device may include at least one of a head-up display device in the vehicle, a device configured to perform projection display for a passenger in a passenger space, and a device configured to project driving indication information on a driving path of the vehicle.

The light fixture may be a lighting tool or an information indication tool. For example, the light fixture may be at least one of a vehicle light, a lighting device in the vehicle, an indicator for assisting a driver in driving in the vehicle, or an indicator for prompting a passenger.

It can be learned that, based on different scenario requirements, the centralized light source may be used to provide light energy to a plurality of types of devices to emit light in the vehicle or other hardware systems.

In some embodiments, the vehicle further includes a first light splitting device.

That the light emitted by the centralized light source is allocated based on the information about the first optical power, so that each target device to emit light obtains respective corresponding light by using the optical waveguide includes:

determining a split ratio of the first light splitting device based on the information about the first optical power, so that each target device to emit light obtains respective corresponding light by using the optical waveguide.

FIG. 4 is an example schematic diagram of a system architecture according to an embodiment of this application. The first light splitting device 42 may be located on an optical transmission path between the centralized light source and each device to emit light. In this way, a part of the light emitted by the centralized light source 43 that is allocated to each optical waveguide may be determined by determining the split ratio of the first light splitting device 42.

The first light splitting device may be one light splitter, or may include a plurality of light splitters. The light splitter may also be referred to as an optical splitter, a light beam splitter, an optical power splitter, or the like, and is a device that divides light input from an input port into a plurality of parts according to a specific ratio, and then respectively outputs the plurality of parts of light from a plurality of output ports. In the light splitters included in the first light splitting device, a split ratio of at least one light splitter is adjustable. The light splitter with an adjustable split ratio may be designed based on a principle of an electro-optic effect, an acousto-optic effect, a magneto-optic effect, or a thermo-optic effect. This is not limited in this embodiment of this application. An adjustable range of the split ratio of the light splitter with an adjustable split ratio may be selected based on a requirement of an actual application scenario. For example, in some examples, a split ratio of a light splitter may be adjusted in a range of [0,1]. In some scenarios, the light splitter may be used as an optical switch of a device to emit light corresponding to the light splitter.

The light splitter in the light splitting device may be arranged in a plurality of forms.

For example, FIG. 5a is an example schematic diagram of the first light splitting device.

The first light splitting device is a light splitter 511. The centralized light source 501 corresponds to an input port of the light splitter 511. Each device to emit light (for example, a device 521 to emit light, a device 522 to emit light, and a device 523 to emit light in FIG. 5a) corresponds to an output port of the light splitter 511, and different devices to emit light correspond to different output ports. If current target devices to emit light are the device 521 to emit light and the device 522 to emit light, after the input port of the light splitter 511 receives the light emitted by the centralized light source 501, values of light energy output by the output ports respectively corresponding to the device 521 to emit light and the device 522 to emit light may be based on information about first optical powers respectively required by the device 521 to emit light and the device 522 to emit light, that is, split ratios of the light splitter 511 for the output ports may be determined.

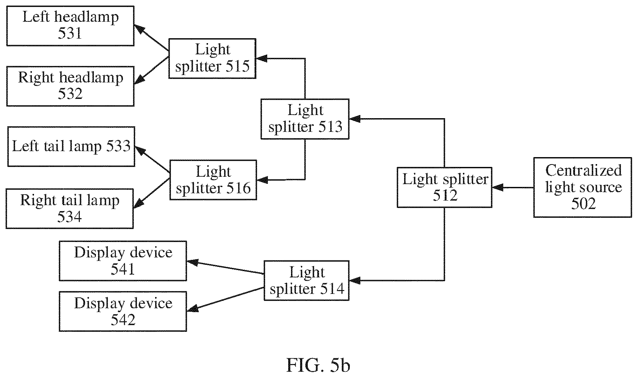

For another example, FIG. 5b is another example schematic diagram of the first light splitting device. The first light splitting device may include multi-level light splitters. A light splitter 512 is used as a first-level light splitting device, a light splitter 513 and a light splitter 514 are second-level light splitting devices, and a light splitter 515 and a light splitter 516 are used as third-level light splitting devices. Output ports of the light splitting device 513 respectively correspond to the light splitter 515 and the light splitter 516. Two output ports of the light splitter 515 respectively correspond to a left headlamp 531 and a right headlamp 532 in the vehicle. Two output ports of the light splitter 516 respectively correspond to a left tail lamp 533 and a right tail lamp 534 in the vehicle. Output ports of the light splitting device 514 respectively correspond to a display device 541 and a display device 542 in the vehicle.

A split ratio of the light splitter 512, the light splitter 513, and the light splitter 514 is adjustable. A split ratio of the light splitter 515 and the light splitter 516 is fixed to 1:1.

It can be learned that, in this embodiment of this application, the split ratio of the first light splitting device corresponding to the device to emit light is determined based on the first optical power, and the light energy from the centralized light source may be flexibly allocated by using the first light splitting device based on an actual scenario requirement, so that target light energy transmitted to the device to emit light can meet a light-emitting requirement of the device to emit light.

Optionally, a light-emitting manner of the centralized light source and a manner in which the target device to emit light obtains the required light may be one of the following:

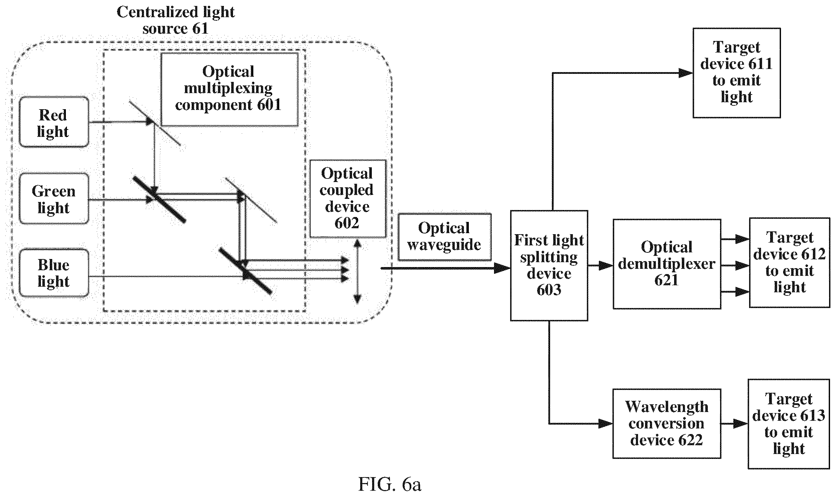

1. In an embodiment, as shown in FIG. 6a, the centralized light source 61 may emit light of three colors: red, green, and blue, and the light of the three colors is combined into white light by using an optical multiplexing component 601 and the optical coupled device 602. The optical multiplexing component 601 can concentrate the light of the three colors emitted by the centralized light source 61, and the optical coupled device 602 may combine the concentrated light of the three colors to obtain the white light.

If a color of light required by a target device 611 to emit light is the same as a color of the white light output by the optical coupled device 602, the target device 611 to emit light can emit light based on the received white light.

If the target device 612 to emit light needs to perform colored projection, an optical demultiplexer 621 corresponding to the target device 612 to emit light may demultiplex received light to obtain red light, green light, and blue light, so that the target device 612 to emit light may obtain required three-color light that is separately independent for subsequent projection display.

If a color of light required by a target device 613 to emit light is different from the color of the white light output by the optical coupled device 602, the target device 613 to emit light may perform wavelength conversion on the received white light by using a corresponding wavelength conversion apparatus 622 to obtain light whose color is the color required by the target device 613 to emit light.

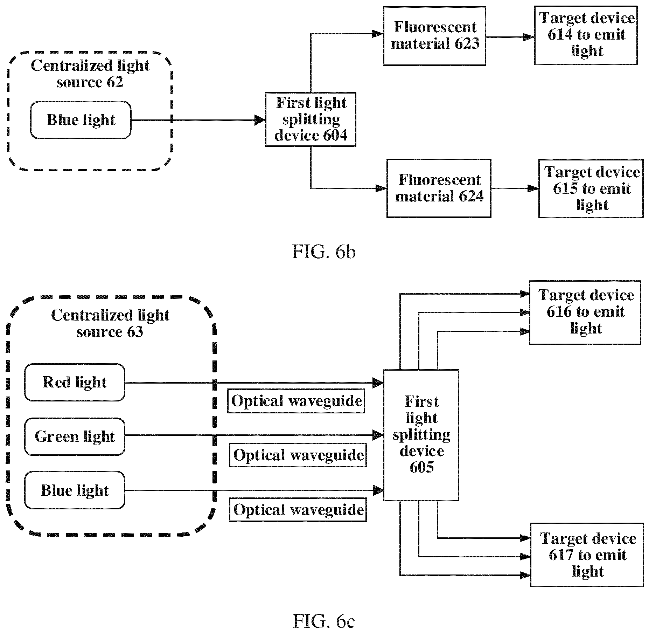

2. In an embodiment, as shown in FIG. 6b, the centralized light source 62 may emit blue light, and each target device to emit light (for example, a target device 614 to emit light and a target device 615 to emit light in the figure) may adjust a color of received light by using respective corresponding fluorescent material, so that a color of the light obtained by the corresponding target device to emit light meets respective light color requirement.

3. In an embodiment, the centralized light source is configured to emit red light, green light, and blue light, the red light, the green light, and the blue light are separately transmitted when emitted from the centralized light source, and the light-emitting instruction further carries color information of the light required by each target device to emit light.

The foregoing step of determining the split ratio of the first light splitting device based on the information about the first optical power includes:

determining, based on the first optical power and the color information, split ratios of the first light splitting device for the red light, the green light, and the blue light respectively.

In this embodiment, the split ratios of the first light splitting device for red light, green light, and blue light respectively may be split ratios of the first light splitting device for red light, green light, and blue light received by each target device to emit light. To facilitate setting the split ratios of red light, green light, and blue light respectively received by each target device to emit light, the first light splitting device may include a plurality of light splitters, and the plurality of light splitters may be in a one-to-one correspondence with the plurality of devices to emit light. Alternatively, the first light splitting device may be one light splitter, and an output port of the one light splitter corresponds to red light, green light, or blue light of a device to emit light.

The following uses FIG. 6c as an example to describe this embodiment.

As shown in FIG. 6c, in an example, a centralized light source 63 may emit three types of light: red light, green light, and blue light, and after being emitted from the centralized light source 63, the three types of light are separately independently transmitted by using different optical waveguides.

Light required by the target device 616 to emit light is white light, and a split ratio of the first light splitting device 605 for red light, green light, and blue light corresponding to the target device 616 to emit light is 1:1:1, so that red light, green light, and blue light received by the target device 616 to emit light are combined into the required white light.

Light required by the target device 617 to emit light is yellow light, and a split ratio of the first light splitting device 605 for red light, green light, and blue light corresponding to the target device 617 to emit light is 1:1:0, so that the target device 617 to emit light obtains yellow light obtained by combining red light and green light.

It can be learned that, in this embodiment of this application, the first light splitting device may be used to not only control the manner of allocating light emitted by the centralized light source to the target devices to emit light, but also control, by adjusting split ratios respectively corresponding to red light, green light, and blue light, the colors of the light received by the target devices to emit light, thereby greatly improving control efficiency, reducing use of the wavelength conversion apparatus, and reducing hardware costs.

In some embodiments, each device to emit light is connected to a second light splitting device, and the second light splitting device is further connected to an optical power meter.

The method further includes:

when the target device to emit light emits light, obtaining a third optical power detected by an optical power meter corresponding to the target device to emit light; and
determining the split ratio of the first light splitting device based on the third optical power, and/or determining an optical power of the centralized light source.

In this embodiment of this application, each device to emit light is connected to the corresponding second light splitting device by using the optical waveguide, and each second light splitting device is connected to a corresponding optical power meter by using the optical waveguide.

A split ratio of the second light splitting device is a fixed value. In this way, a ratio of a power of light received by a device to emit light corresponding to any second light splitting device to a third optical power detected by an optical power meter corresponding to the second light splitting device is a fixed value. Therefore, in this embodiment of this application, the third optical power detected by the optical power meter corresponding to the target device to emit light may be used to determine a value of light energy of the light received by the corresponding target device to emit light, to determine whether the value of light energy of the light received by the corresponding target device to emit light meets a requirement of the corresponding target device to emit light.

Usually, the second light splitting device allocates more light energy to the corresponding target device to emit light, and allocates less light energy to the corresponding optical power meter. In this way, most of the light may be transmitted to the corresponding target device to emit light for light emitting, and only a small part of the light is transmitted to the corresponding optical power meter for detection, thereby avoiding a waste of optical resources.

For example, if a second split ratio of a second light splitting device corresponding to a target device to emit light is 1:99, a ratio of a third optical power detected by an optical power meter corresponding to the target device to emit light to an optical power of light received by the target device to emit light is 1:99.

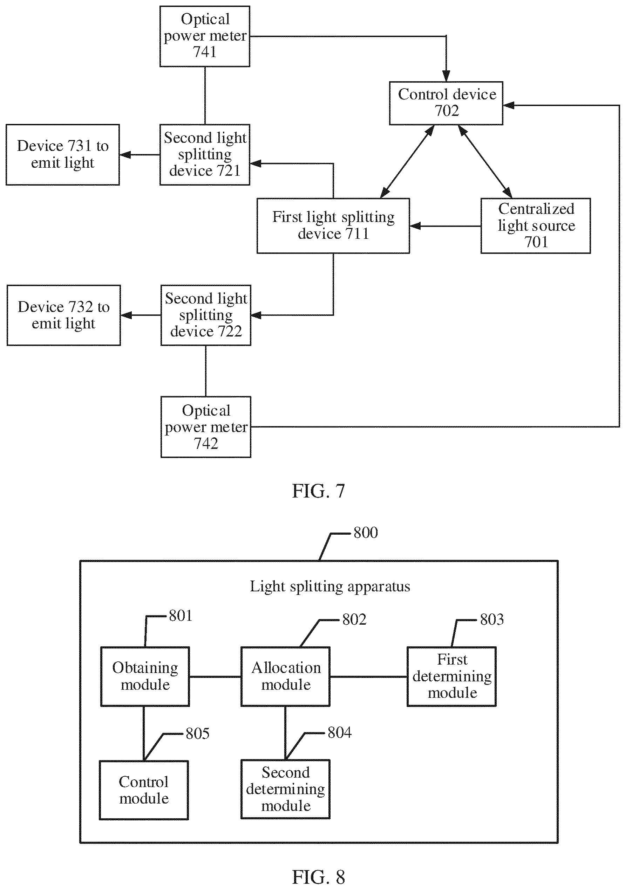

FIG. 7 is an example schematic diagram of a system architecture according to an embodiment of this application.

A device 731 to emit light and a device 732 to emit light each correspond to a second light splitting device and an optical power meter, and split ratios of the second light splitting devices respectively corresponding to the device 731 to emit light and the device 732 to emit light are both 1:99.

In this embodiment of this application, the third optical power detected by the optical power meter connected to the second light splitting device may be used as feedback information about the light received by the target device to emit light, so that the control device can effectively monitor, by using the second light splitting device and the optical power meter, whether the light received by each target device to emit light can meet a requirement of each target device to emit light, and perform adjustment in time when a deviation occurs.

In some embodiments, the target device to emit light includes a first device to emit light and a second device to emit light, and a ratio of a maximum optical power corresponding to the first device to emit light to a maximum optical power corresponding to the second device to emit light is less than a preset ratio threshold.

The method further includes:

if it is detected that a first optical power of the first device to emit light is updated, updating the split ratio of the first light splitting device based on an updated first optical power of the first device to emit light.

In this embodiment of this application, the preset ratio threshold is usually small. For example, the preset ratio threshold may be 0.2, 0.1, or 0.05. In this way, the ratio of the maximum optical power corresponding to the first device to emit light to the maximum optical power corresponding to the second device to emit light is less than the preset ratio threshold, indicating that the maximum optical power corresponding to the first device to emit light is apparently less than the maximum optical power corresponding to the second device to emit light.

The preset ratio threshold may be preset based on user requirement on accuracy of light intensities of the first device to emit light and the second device to emit light.

For example, the first device to emit light is the display panel of the in-vehicle computer in the vehicle, and the second device to emit light is the headlamp in the vehicle. In an actual use process, a user usually cannot sense a fluctuation change of a light intensity of the headlamp within a range of 5%, and the preset ratio threshold may be set to 5%. In an example, if a maximum optical power corresponding to the display panel of the in-vehicle computer is 200 milliwatts (mW), and a maximum optical power of the headlamp is 5 watts (W), a maximum optical power required by the display panel is less than 5% of the maximum optical power of the headlamp. The display panel of the in-vehicle computer and the headlamp are separately connected to the first light splitting device by using the optical waveguide. In this case, the display panel may be used as the first device to emit light in this embodiment of this application, and the headlamp may be used as the second device to emit light in this embodiment of this application.

In this embodiment of this application, the split ratio of the first light splitting device may be updated based on a first optical power of the second device to emit light and the updated first optical power of the first device to emit light, to reallocate the light respectively obtained by the first device to emit light and the second device to emit light. In this case, before and after reallocation, a sum of the light respectively obtained by the first device to emit light and the second device to emit light may remain unchanged. In this way, the optical power of the centralized light source may also remain unchanged, and only the split ratio of the first light splitting device needs to be updated.

For example, in an example, the target device to emit light is the display panel of the in-vehicle computer and the headlamp of the vehicle. The first device to emit light is the display panel of the in-vehicle computer, and the second device to emit light is the headlamp.

In a process of using the in-vehicle computer, a user may enter an indication instruction for adjusting a luminance of the display panel, causing a first optical power corresponding to the display panel to be updated. Alternatively, the in-vehicle computer may automatically generate, based on a current time or a current environment luminance, the indication instruction for adjusting the luminance of the display panel, causing the first optical power corresponding to the display panel to be updated. However, if the control device detects that the first optical power corresponding to the display panel is updated, the split ratio of only the first light splitting device may be updated, and there is no need to correspondingly adjust the optical power of the centralized light source based on update of the first optical power corresponding to the display panel. For example, before the update, if the first optical power corresponding to the display panel is 200 mW, a first optical power of the headlamp is 4800 mW, a total power of the centralized light source is 5000 mW, a split ratio for the display panel is 4%, and a split ratio for the headlamp is 96%,

If it is detected that the first optical power corresponding to the display panel is updated from 200 mW to 250 mW, the split ratio of the first light splitting device may be updated, so that the split ratio for the display panel is updated to 5%, a value of light energy of light obtained by the display panel by using the optical waveguide changes to 250 mW, and a value of light energy of light obtained by the headlamp by using the optical waveguide changes to 4500 mW. In this case, the split ratio for the headlamp is updated to 95%, and the total power 5000 mW of the centralized light source remains unchanged. However, the change of the optical power of the headlamp from 4800 mW to 4500 mW cannot be perceived by the user by unaided eyes. Therefore, the adjustment has no impact on use effect of the headlamp.

It can be learned that, in this embodiment of this application, although the first optical power required by the target device to emit light changes, in an actual control process, the split ratio of only the first light splitting device needs to be adjusted, and the optical power of the centralized light source does not need to be adjusted. Therefore, a control procedure is optimized, the optical power of the centralized light source is avoided from being adjusted frequently, and a service life of the centralized light source is prolonged.

In some embodiments, the method further includes:

determining the optical power of the centralized light source based on the first optical power, where the optical power of the centralized light source is not less than a sum of first optical powers respectively corresponding to the target devices to emit light; and
controlling the centralized light source to emit light based on the optical power of the centralized light source.

In this embodiment of this application, the optical power of the centralized light source may be determined based on the information about the first optical power required by each target device to emit light. The optical power of the centralized light source is not less than a sum of first optical powers respectively corresponding to the target devices to emit light. In addition, a loss of light on an optical transmission path from the centralized light source to each target device to emit light in a processes including transmission and light splitting may be further determined as an optical loss corresponding to each target device to emit light. After the optical loss corresponding to each target device to emit light is obtained, the optical power of the centralized light source may be determined based on the optical loss corresponding to each target device to emit light and the information about the first optical power required by each target device to emit light.

For example, if a first optical power of a target device a to emit light is 300 mW, a first optical power of a target device b to emit light is 1200 mW, an optical loss corresponding to the target device a to emit light is 10%, and an optical loss corresponding to the target device b to emit light is 5%, the optical power of the centralized light source may be:

$$300 * (1 + 0.1) + 1200 * (1 + 0.05) = 1590\,(\text{mW})$$

It can be learned that, the optical power of the centralized light source may be properly determined based on the first optical power, thereby avoiding a resource waste while the requirement of the target device to emit light is met.

The foregoing describes the light splitting method from several aspects in embodiments of this application. The following describes a light splitting apparatus in this application with reference to the accompanying drawings.

As shown in FIG. 8, an embodiment of this application provides a light splitting apparatus 800. The light splitting apparatus 800 may be applied to a control device. The control device is located in a vehicle. The vehicle further includes at least two devices to emit light that provide light energy by using a centralized light source, and each of the devices to emit light is connected to the centralized light source by using an optical waveguide.

An embodiment of the light splitting apparatus 800 includes:

an obtaining module 801, configured to obtain a light-emitting instruction, where the light-emitting instruction carries information about a first optical power required by one target device to emit light of the at least two devices to emit light, or information about a first optical power required by each of a plurality of target devices to emit light; and
an allocation module 802, configured to allocate, based on the information about the first optical power, light emitted by the centralized light source, so that each target device to emit light obtains respective corresponding light by using the optical waveguide.

Optionally, the vehicle further includes a first light splitting device.
The allocation module 802 is configured to:
determine a split ratio of the first light splitting device based on the information about the first optical power, so that each target device to emit light obtains respective corresponding light by using the optical waveguide.
Optionally, the centralized light source is configured to emit red light, green light, and blue light, the red light, the green light, and the blue light are separately transmitted when emitted from the centralized light source, and the light-emitting instruction further carries color information of the light required by each target device to emit light.
The allocation module 802 is configured to:
determine, based on the first optical power and the color information, split ratios of the first light splitting device for the red light, the green light, and the blue light respectively.
Optionally, each device to emit light is connected to a second light splitting device, and the second light splitting device is further connected to an optical power meter.
The light splitting apparatus 800 further includes a first determining module 803.
The first determining module 803 is configured to:

when the target device to emit light emits light, obtain a third optical power detected by an optical power meter corresponding to the target device to emit light; and

determine the split ratio of the first light splitting device based on the third optical power, and/or determining an optical power of the centralized light source.

Optionally, the target device to emit light includes a first device to emit light and a second device to emit light, and a ratio of a maximum optical power corresponding to the first device to emit light to a maximum optical power corresponding to the second device to emit light is less than a preset ratio threshold.

The light splitting apparatus 800 further includes a second determining module 804.

The second determining module 804 is configured to:

if it is detected that a first optical power of the first device to emit light is updated, update the split ratio of the first light splitting device based on an updated first optical power of the first device to emit light.

The light splitting apparatus 800 further includes a control module 805.

The control module 805 is configured to:

determine the optical power of the centralized light source based on the first optical power, where the optical power of the centralized light source is not less than a sum of first optical powers respectively corresponding to the target devices to emit light; and

control the centralized light source to emit light based on the optical power of the centralized light source.

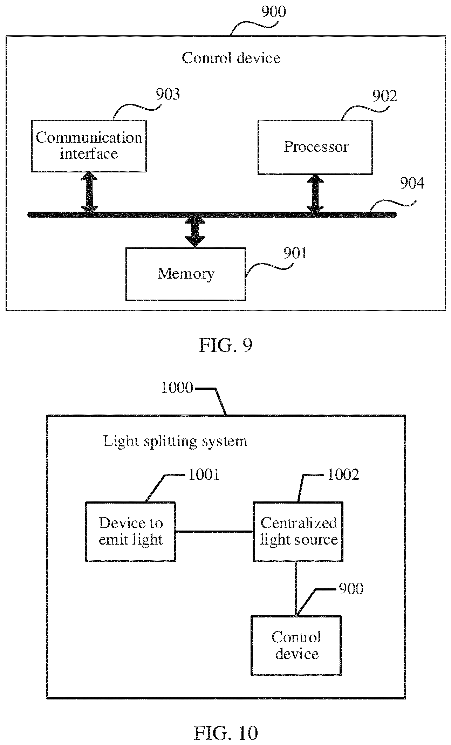

FIG. 9 is a schematic diagram of a possible logical structure of a control device 900 according to an embodiment of this application. The control device 900 includes a memory 901, a processor 902, a communication interface 903, and a bus 904. The memory 901, the processor 902, and the communication interface 903 implement communication connection to each other by using the bus 904.

The memory 901 may be a read-only memory (Read-Only Memory, ROM), a static storage device, a dynamic storage device, or a random access memory (Random Access Memory, RAM). The memory 901 may store a program. When the program stored in the memory 901 is executed by the processor 902, the processor 902 and the communication interface 903 are configured to perform steps 201-202 and the like in the foregoing light splitting method embodiment.

The processor 902 may be a central processing unit (Central Processing Unit, CPU), a microprocessor, an application-specific integrated circuit (Application-Specific Integrated Circuit, ASIC), a graphics processing unit (graphics processing unit, GPU), a digital signal processor (Digital Signal Processor, DSP), an application-specific integrated circuit (ASIC), a field-programmable gate array (Field-Programmable Gate Array, FPGA) or another programmable logic device, a discrete gate or transistor logic device, a discrete hardware component, or any combination thereof. The processor 902 is configured to execute a related program, to implement functions that need to be performed by the obtaining module, the allocation module, the first determining module, the second determining module, and the control module in the light splitting apparatus in this embodiment of this application, or perform steps 201-202 and the like in the light splitting method embodiment in the method embodiment of this application. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 901. The processor 902 reads information in the memory 901, and performs steps 201-202 and the like in the foregoing light splitting method embodiment in combination with hardware of the processor 902.

The communication interface 903 uses a transmit and receive apparatus, for example, but is not limited to, a transceiver, to implement communication between the control device 900 and another device or a communication network. For example, information about a split ratio may be sent to a first light splitting device by using the communication interface 903.

The bus 904 may implement paths for transferring information between components (for example, the memory 901, the processor 902, and the communication interface 903) of the control device 900. The bus 904 may be a peripheral component interconnect (Peripheral Component Interconnect, PCI) bus or an extended industry standard architecture (Extended Industry Standard Architecture, EISA) bus, or the like. Buses may be classified into an address bus, a data bus, a control bus, and the like. For ease of description, the bus in FIG. 9 is represented by using only one bold line, but which does not indicate that there is only one bus or one type of bus.

In another embodiment of this application, a computer-readable storage medium is further provided. The computer-readable storage medium stores computer-executable instructions. When a processor of a device executes the computer-executable instructions, the device performs the steps performed by the processor in FIG. 9.

In another embodiment of this application, a computer program product is further provided. The computer program product includes computer-executable instructions, and the computer-executable instructions are stored in a computer-readable storage medium. When a processor of a device executes the computer-executable instructions, the device performs the steps performed by the processor in FIG. 9.

In another embodiment of this application, a chip system is further provided. The chip system includes a processor, and the processor is configured to implement the steps performed by the processor in FIG. 9. In a possible design, the chip system may further include a memory. The memory is configured to store program instructions and data that are necessary for a data writing apparatus. The chip system may include a chip, or may include a chip and another discrete device.

In another embodiment of this application, as shown in FIG. 10, a light splitting system 1000 is further provided. The light splitting system 1000 includes a control device 900, and the control device 900 is configured to implement steps 201-202 and the like in the foregoing light splitting method embodiment.

In some embodiments, the light splitting system 1000 further includes at least two devices 1001 to emit light (only one is shown as an example in FIG. 10), and each device 1001 to emit light is connected to a centralized light source 1002 by using an optical waveguide.

In some embodiments, the device 1001 to emit light may include a display device and/or a light fixture.

The display device may include a projection device and/or a display panel.

The display panel is a device that performs planar display or curved display by using a display screen such as a touchscreen or a non-touchscreen. For example, the display panel may include at least one of a touchscreen panel in the in-vehicle computer and various meter display panels. The projection device is a device that can project an image, a video, or the like to an entity such as a curtain, a wall, or a road, or project an image or a video to a non-entity such as air. For example, the projection device may include at least one of a head-up display device in the vehicle, a device configured to perform projection display for a passenger in a passenger space, and a device configured to project driving indication information on a driving path of the vehicle.

The light fixture may be a lighting tool or an information indication tool. For example, the light fixture may be at least one of a vehicle light, a lighting device in the vehicle, an indicator for assisting a driver in driving in the vehicle, or an indicator for prompting a passenger.

It can be learned that, based on different scenario requirements, the centralized light source may be used to provide light energy to a plurality of types of devices to emit light in the vehicle or other hardware systems.

In some embodiments, an optical waveguide end structure is located at one end of the optical waveguide on a corresponding target device to emit light, and the optical waveguide end structure corresponds to a target light type of the corresponding target device to emit light.

A target light type of any target device to emit light refers to a light type required by the target device to emit light. The target light type may be described by using at least one of the following: a form (such as a face light type, a linear light type, or a point light type) of the target light type, a shape (such as a rectangle, a circle, a triangle, a sector, or a trapezoid), a length of the target light type, a size (such as a width, a length, or a diameter) of the target light type, light intensity distribution in the target light type, and the like.

The optical waveguide may include an optical core and a cladding. A light refractive index of the cladding is less than that of the optical core. In this way, when light is transmitted in the optical core at a proper angle, total reflection is formed at a boundary between the optical core and the cladding. In addition, the optical waveguide may further include a coating (for example, a plastic coating) for protecting the cladding, a shell, and other structures.

Currently, the optical waveguide, such as an optical fiber, input light and output light from two ends of the optical waveguide. However, in this embodiment of this application, the optical waveguide end structure of each target device to emit light may be used to form the target light type required by the corresponding target device to emit light at the corresponding target device to emit light. An arrangement manner of optical waveguides in the optical waveguide end structure may be set, and/or a light output position in the optical waveguide end structure may be set, so that when the optical waveguide end structure emits light, the light type required by the corresponding target device to emit light may be formed.

It can be learned that, in this embodiment of this application, a specific form of the optical waveguide end structure may be flexibly adjusted based on a requirement of the corresponding device to emit light, so that different light types are conveniently and flexibly generated in different devices to emit light as required. In this way, it is unnecessary to configure various different light shaping devices in the devices to emit light for requirements of different light types of the devices to emit light, for example, configure a light guide plate, a light uniform plate, and another light type conversion device, thereby greatly reducing hardware costs.

The following uses an example in which the optical waveguide is an optical fiber to describe the optical waveguide end structure.

Because the optical waveguide is an optical fiber, the optical waveguide end structure is an optical fiber end structure. The optical fiber may include an optical core and a cladding. A light refractive index of the cladding is less than that of the optical core. In addition, the optical fiber may further include a coating (for example, a plastic coating) for protecting the cladding, a shell, and other structures.

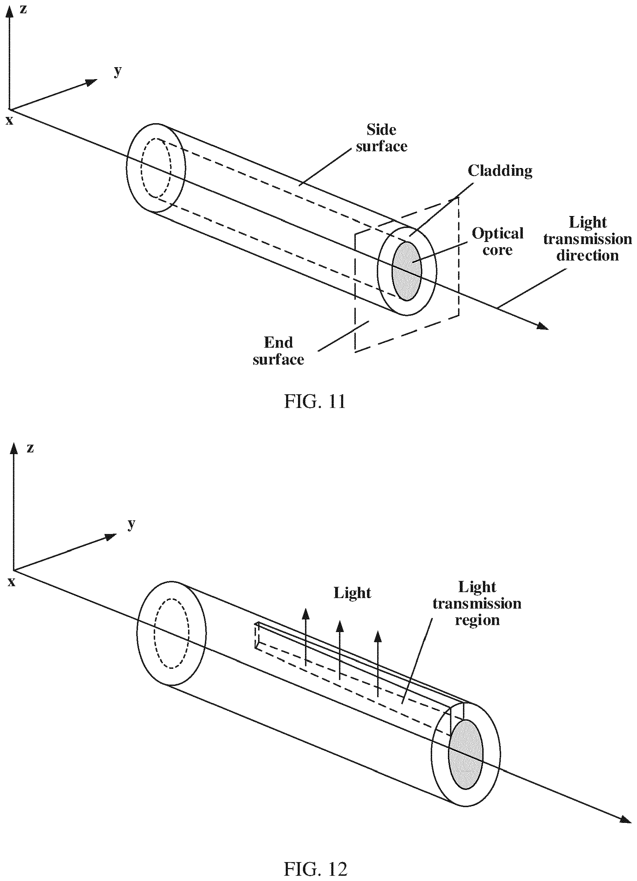

Usually, the optical fiber is of a cylindrical structure. As shown in FIG. 11, parts that are of the optical core in the optical fiber and that are not wrapped by the cladding are separately located at two ends of the optical fiber. One end may be configured to input light, and the other end may be configured to output light. A surface other than two end surfaces corresponding to two ends of the optical core in the optical fiber may be referred to as a side surface of the optical fiber. The side surface of the optical fiber is usually wrapped by the cladding and the coating.

The following describes several optional structures of the optical waveguide end structure.

1. In some embodiments, in an optical waveguide end structure corresponding to at least one target device to emit light, a cladding on a side surface of the optical waveguide is cut to form a light transmission region, so that the optical waveguide end structure emits light from the side surface based on a corresponding target light type.

In this embodiment of this application, to meet requirements of target light types in some application scenarios, the cladding on the side surface of the optical fiber in the optical fiber end structure may be cut in advance, so that light in the optical core in the optical fiber end structure can be emitted from the light transmission region of the side surface of the optical fiber.

In some examples, the light transmission region formed by cutting the cladding may be covered with a transparent material. The transparent material may be for protecting an optical core exposed due to cutting the cladding accordingly.

An area and a shape of the light transmission region may be flexibly determined based on the target light type, so that different light types may be conveniently and flexibly generated in different devices to emit light as required.

For example, if the optical waveguide end structure is arranged in a target light-emitting region in the display panel, and is used as a backlight source of the display panel, the optical waveguide end structure needs to emit light facing the display screen in the display panel. In this case, the light transmission region is also located on a side of the optical waveguide end structure facing the display screen.

For another example, if the optical waveguide end structure is configured to form a linear light type that emits light uniformly, the light transmission region in the optical waveguide end structure may be shown in FIG. 12. Because light energy of the optical waveguide is large at a position far away from one end of the corresponding target device to emit light, a width of the light transmission region along a y-axis direction in FIG. 12 is short at the position far away from the end, so that a small ratio of light is emitted from the light transmission region at this position. However, the light energy of the optical waveguide gradually decreases at a position close to one end of the corresponding target device to emit light. Therefore, in this case, the width of the light transmission region along the y-axis direction in FIG. 12 is long, so that a large ratio of light is emitted from the light transmission region at this position, thereby ensuring uniformity of light emitted by the optical waveguide end structure through the entire light transmission region.

In an example, the target device to emit light includes a display panel of a vehicle, a target light type corresponding to the display panel is a face light type, and in an optical waveguide end structure corresponding to the display panel, the optical waveguide is bent based on the face light type and is arranged in the target light-emitting region, to serve as the backlight source of the display panel.

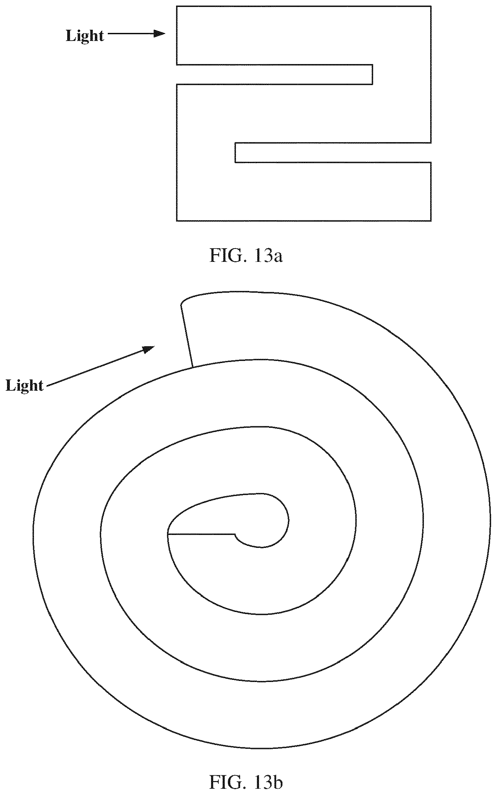

For example, as shown in FIG. 13a, the optical waveguide end structure may be arranged in a rectangular target light-emitting region in an arrangement manner of being bent into a plurality of optical waveguide sections and sequentially arranged in a bending sequence, to form the face light type. Alternatively, as shown in FIG. 13b, the optical waveguide end structure may be arranged in a circular target light-emitting region in an arrangement manner of being bent into multilayer circles or the like, to form the face light type. The light transmission region in the optical waveguide end structure may be on a side facing a screen in the display panel.

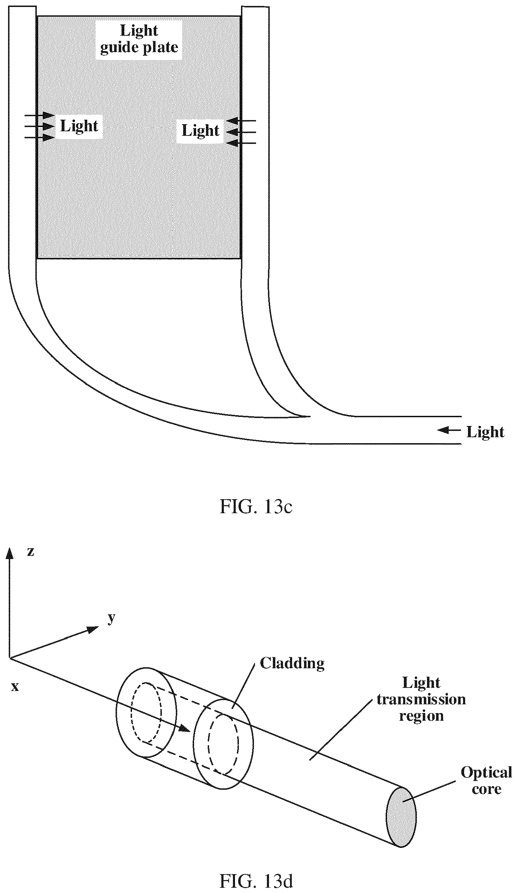

In another example, the target device to emit light includes the display panel of the vehicle, and the target light type corresponding to the display panel is the face light type. As shown in FIG. 13c, the optical waveguide end structure corresponding to the display panel includes two optical waveguides, and the two optical waveguides are respectively located on two sides of the light guide plate. In addition, claddings of optical cores in the two optical waveguides are cut on a side facing the light guide plate to form light transmission regions, so that the two optical waveguides separately form linear light sources. In this way, after light emitted by the linear light sources formed by the two optical waveguides is transmitted through the light guide plate, a face light type may be formed for being used as the backlight source of the display panel.

In still another example, the target device to emit light includes an indicator for prompting a passenger in the vehicle, and a target light type corresponding to the indicator is the linear light type. As shown in FIG. 13d, an optical waveguide end structure corresponding to the indicator is an optical waveguide section of a preset length starting from one end of the optical waveguide on a corresponding target device to emit light. A cladding of an optical core in the optical waveguide section may be cut entirely, so that the optical waveguide section may form a linear light source.

2. In some embodiments, in an optical waveguide end structure corresponding to at least one target device to emit light, a shape of a cross section of an optical core corresponds to the target light type of the corresponding target device to emit light.

In this embodiment of this application, as shown in FIG. 11, a surface perpendicular to a central axis (that is, an x axis in FIG. 11) of the optical core is used as the cross section of the optical core.

That the shape of the cross section of the optical core corresponds to the target light type of the corresponding target device to emit light may be that the shape of the cross section of the optical core is the same as or similar to the target light type of the corresponding target device to emit light, so that when one end of the optical core on the corresponding target device to emit light is used to emit light, the corresponding target light type can be formed based on the shape of the cross section of the optical core.

According to a requirement of the target light type, the shape of the cross section may be a regular shape such as a rectangle, a circle, a triangle, a sector, or a trapezoid, or may be an irregular shape.

Optionally, in an embodiment, the target device to emit light includes a projection device of the vehicle, a target light type corresponding to the projection device is a rectangular light type, and a shape of a cross section of an optical core in an optical waveguide end structure corresponding to the projection device is a rectangle.

For example, the projection device may be a head-up display device in the vehicle, a device configured to perform projection display for a passenger in a passenger space, and a device configured to project driving indication information on a driving path of the vehicle.

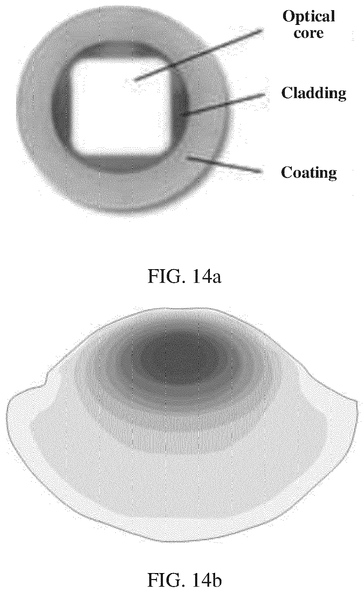

A point light type is usually used in the projection device, and a specific form of the point light type is a rectangular light type. FIG. 14a is an example schematic diagram of the cross section of the optical core in the optical waveguide end structure corresponding to the projection device. The shape of the cross section of the optical core in the optical waveguide end structure corresponding to the projection device is a rectangle, so that when light is transmitted to an end portion of the optical core in the optical waveguide end structure corresponding to the projection device, light is emitted by using the end portion of the optical core, to form the rectangular light type.

Optionally, in an embodiment, the target device to emit light includes a headlamp of the vehicle, in an optical waveguide end structure corresponding to the headlamp, an optical core of the optical waveguide includes a first optical core and a second optical core, and a refractive index of the first optical core and a refractive index of the second optical core correspond to light intensity distribution in a target light type of the headlamp.

In practical application, standards such as GB 25991-2010 specify setting rules of photoelectric performance, a light color, and temperature cycling of the headlamp.

In this embodiment of this application, the first optical core and the second optical core may be arranged in the optical waveguide end structure corresponding to the headlamp, and refractive indexes of the first optical core and the second optical core are different. Therefore, light transmitted to the optical waveguide end structure of the headlamp is not uniformly output on an end surface of the first optical core and an end surface of the second optical core. In this way, light with gradient light intensities may be output by using the optical waveguide end structure of the headlamp. In addition, a specific arrangement manner of the first optical core and the second optical core in the optical waveguide end structure of the headlamp may be determined based on the target light type of the headlamp.

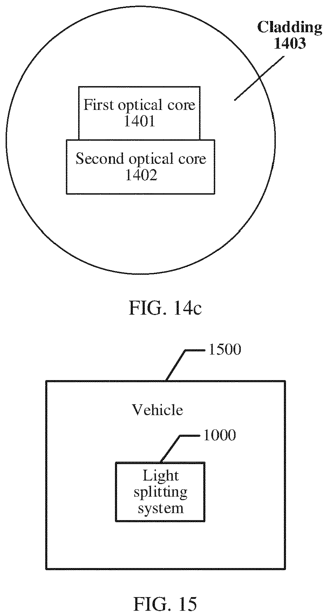

FIG. 14b is an example schematic diagram of the light intensity distribution of the target light type of the headlamp according. A light intensity of an upper portion of the target light type is strong, and a light intensity of a lower portion is weak. Based on a requirement of the target light type of the headlamp, as shown in FIG. 14c, a first optical core 1401 may be arranged above a second optical core 1402, and a refractive index of the first optical core 1401 is greater than that of the second optical core 1402. In addition, a width of the first optical core 1401 may alternatively be less than a width of the second optical core 1402. In this way, a light intensity of light output by the first optical core 1401 is greater than a light intensity of light output by the second optical core 1402, so that the optical waveguide end structure of the headlamp can emit a light type with light intensities gradually weakening from up to down. The light type may be the same as or similar to the target light type of the headlamp, thereby reducing use of some light shaping devices in the headlamp.

In another embodiment of this application, as shown in FIG. 15, a vehicle 1500 is further provided. The vehicle 1500 includes a light splitting system 1000.

A person of ordinary skill in the art may be aware that, in combination with the examples of units and algorithm steps described in the embodiments disclosed in this specification, this application may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions in the embodiments.

In addition, functional units in embodiments of this application may be integrated into one processing unit, or each of the units may exist alone physically, or two or more units are integrated into one unit.

When functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of embodiments of this application, but are not intended to limit the protection scope of embodiments of this application.

**Claims**

1.  A light splitting method, applied to a control device, wherein the control device is located in a vehicle, the vehicle further comprises at least two devices to emit light that provide light energy by using a centralized light source, each of the devices to emit light is connected to the centralized light source by using an optical waveguide, and the method comprises:

    obtaining a light-emitting instruction, wherein the light-emitting instruction carries information about a first optical power required by one target device to emit light of the at least two devices to emit light, or information about a first optical power required by each of a plurality of target devices to emit light; and
    allocating, based on the information about the first optical power, light emitted by the centralized light source, so that each target device to emit light obtains respective corresponding light by using the optical waveguide.

2.  The method according to claim 1, wherein the vehicle further comprises a first light splitting device; and
    the allocating, based on the information about the first optical power, light emitted by the centralized light source, so that each target device to emit light obtains respective corresponding light by using the optical waveguide comprises:
    determining a split ratio of the first light splitting device based on the information about the first optical power, so that each target device to emit light obtains respective corresponding light by using the optical waveguide.

3.  The method according to claim 2, wherein the centralized light source is configured to emit red light, green light, and blue light, the red light, the green light, and the blue light are separately transmitted when emitted from the centralized light source, and the light-emitting instruction further carries color information of light required by each target device to emit light; and
    the determining a split ratio of the first light splitting device based on the information about the first optical power comprises:
    determining, based on the first optical power and the color information, split ratios of the first light splitting device for the red light, the green light, and the blue light respectively.

4.  The method according to claim 2 or 3, wherein each device to emit light is connected to a second light splitting device, and the second light splitting device is further connected to an optical power meter; and
    the method further comprises:

when the target device to emit light emits light, obtaining a third optical power detected by an optical power meter corresponding to the target device to emit light; and

determining the split ratio of the first light splitting device based on the third optical power, and/or determining an optical power of the centralized light source.

5. The method according to any one of claims 2 to 4, wherein the target device to emit light comprises a first device to emit light and a second device to emit light, and a ratio of a maximum optical power corresponding to the first device to emit light to a maximum optical power corresponding to the second device to emit light is less than a preset ratio threshold; and

the method further comprises:

if it is detected that a first optical power of the first device to emit light is updated, updating the split ratio of the first light splitting device based on an updated first optical power of the first device to emit light.

6. The method according to any one of claims 1 to 5, wherein the method further comprises:

determining the optical power of the centralized light source based on the first optical power, wherein the optical power of the centralized light source is not less than a sum of first optical powers respectively corresponding to the target devices to emit light; and

controlling the centralized light source to emit light based on the optical power of the centralized light source.

7. A control device, wherein the control device comprises at least one processor, a memory, and instructions that are stored in the memory and that can be executed by the at least one processor, and the at least one processor executes the instructions to implement the method according to any one of claims 1 to 6.

8. A computer-readable storage medium, storing a computer program, wherein when the computer program is executed by a processor, the method according to any one of claims 1 to 6 is implemented.

9. A light splitting system, wherein the light splitting system comprises a control device, and the control device is configured to implement the method according to any one of claims 1 to 6.

10. The light splitting system according to claim 9, wherein the light splitting system further comprises at least two devices to emit light, and each of the devices to emit light is connected to a centralized light source by using an optical waveguide.

11. The light splitting system according to claim 10, wherein an optical waveguide end structure is located at one end of the optical waveguide on a corresponding target device to emit light, and the optical waveguide end structure corresponds to a target light type of the corresponding target device to emit light.

12. The light splitting system according to claim 11, wherein in an optical waveguide end structure corresponding to at least one target device to emit light, a cladding on a side surface of the optical waveguide is cut to form a light transmission region, so that the optical waveguide end structure emits light from the side surface based on a corresponding target light type.

13. The light splitting system according to claim 12, wherein the target device to emit light comprises a display panel of a vehicle, a target light type corresponding to the display panel is a face light type, and in an optical waveguide end structure corresponding to the display panel, the optical waveguide is bent based on the face light type and is arranged in a target light-emitting region, to serve as a backlight source of the display panel.

14. The light splitting system according to claim 11, wherein in an optical waveguide end structure corresponding to at least one target device to emit light, a shape of a cross section of an optical core corresponds to the target light type of the corresponding target device to emit light.

15. The light splitting system according to claim 14, wherein the target device to emit light comprises a projection device of a vehicle, a target light type corresponding to the projection device is a rectangular light type, and a shape of a cross section of an optical core in an optical waveguide end structure corresponding to the projection device is a rectangle.

16. The light splitting system according to claim 14, wherein the target device to emit light comprises a headlamp of a vehicle, in an optical waveguide end structure corresponding to the headlamp, an optical core of the optical waveguide comprises a first optical core and a second optical core, and a refractive index of the first optical core and a refractive index of the second optical core correspond to light intensity distribution in a target light type of the headlamp.

17. The light splitting system according to any one of claims 9 to 16, wherein the device to emit light comprises a display device and/or a light fixture in the vehicle.

18. A vehicle, wherein the vehicle comprises the light splitting system according to any one of claims 9 to 17.

Vehicle 100

ADAS 110

Peripheral device 130

Wireless communication system 131

In-vehicle computer 132

Microphone 133

Loudspeaker 134

Sensing system 120

Positioning system 121

Inertial measurement unit 122

Radar 123

Laser rangefinder 124

Camera 125

Computer system 140

Processor 141

Memory 142

Centralized light source 160

Device 150 to emit light

FIG. 1

Obtain a light-emitting instruction 201

Allocate, based on information about a first optical power, light emitted by a centralized light source, so that each target device to emit light obtains respective corresponding light by using an optical waveguide 202

FIG. 2

EP 4 386 467 A1

FIG. 3

FIG. 4

FIG. 5a

FIG. 5b

Centralized light
source 61

Optical
multiplexing
component 601

Red
light

Green
light

Blue
light

Optical
coupled
device
602

Optical
waveguide

First light
splitting
device
603

Target
device 611
to emit
light

Optical
demultiplexer
621

Target
device 612
to emit
light

Wavelength
conversion
device 622

Target
device 613
to emit
light

FIG. 6a

FIG. 6b

FIG. 6c

FIG. 7

FIG. 8

900

Control device

903

Communication interface

902

Processor

904

Memory

901

FIG. 9

1000

Light splitting system

1001

Device to emit light

1002

Centralized light source

900

Control device

FIG. 10

FIG. 11

FIG. 12

EP 4 386 467 A1

Light ⟶

FIG. 13a

Light

FIG. 13b

30

FIG. 13c

FIG. 13d

FIG. 14a

FIG. 14b

Cladding
1403

First optical core
1401

Second optical core
1402

FIG. 14c

1500

Vehicle

1000

Light
splitting
system

FIG. 15

## INTERNATIONAL SEARCH REPORT

| | |
|---|---|
| International application No. | |
| | **PCT/CN2022/103251** |

**A.  CLASSIFICATION OF SUBJECT MATTER**

G02B 27/10(2006.01)i

According to International Patent Classification (IPC) or to both national classification and IPC

**B.  FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; JPTXT: 车载, 车辆, 车用, 集中, 总, 中央, 中心, 分光, 分束, 颜色, 色彩, 红, 绿, 蓝, vehicle, collect, center, splitter, color, colour, red, green, blue

**C.  DOCUMENTS CONSIDERED TO BE RELEVANT**

| Category* | Citation of document, with indication, where appropriate, of the relevant passages | Relevant to claim No. |
|---|---|---|
| Y | CN 109131041 A (YLX INCORPORATED) 04 January 2019 (2019-01-04)<br>  description, paragraphs [0024]-[0042], and figures 1-13 | 1-18 |
| Y | CN 109324464 A (CHENGDU IDEALSEE TECHNOLOGY CO., LTD.) 12 February 2019 (2019-02-12)<br>  description, paragraphs [0023]-[0042], and figure 1 | 1-18 |
| Y | CN 103574377 A (YUNNAN BANGQIAO ENERGY-SAVING SCIENCE & TECHNOLOGY CO., LTD.) 12 February 2014 (2014-02-12)<br>  description, paragraphs [0028]-[0045], and figures 1-5 | 11-18 |
| Y | CN 109668574 A (YLX INCORPORATED) 23 April 2019 (2019-04-23)<br>  description, paragraphs [0015]-[0043], and figures 1-7 | 1-18 |
| A | CN 107069393 A (LASER FUSION RESEARCH CENTER, CHINA ACADEMY OF ENGINEERING PHYSICS) 18 August 2017 (2017-08-18)<br>  entire document | 1-18 |
| A | CN 201845130 U (WUXI RONGXING TECHNOLOGY CO., LTD.) 25 May 2011 (2011-05-25)<br>  entire document | 1-18 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 August 2022** | **13 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| International application No. |
|---|
| **PCT/CN2022/103251** |

| Patent document cited in search report | | | Publication date (day/month/year) | Patent family member(s) | | | Publication date (day/month/year) |
|---|---|---|---|---|---|---|---|
| CN | 109131041 | A | 04 January 2019 | WO | 2018233116 | A1 | 27 December 2018 |
| CN | 109324464 | A | 12 February 2019 | None | | | |
| CN | 103574377 | A | 12 February 2014 | CN | 103574377 | B | 25 May 2016 |
| CN | 109668574 | A | 23 April 2019 | WO | 2019075938 | A1 | 25 April 2019 |
| CN | 107069393 | A | 18 August 2017 | CN | 207116903 | U | 16 March 2018 |
| CN | 201845130 | U | 25 May 2011 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111280767
- GB 259912010 A